# EUROPÄISCHE PATENTSCHRIFT

(11) **EP 0 456 959 B1**
(45) Veröffentlichungstag und Bekanntmachung des Hinweises auf die Patenterteilung: **14.12.1994**
(21) Anmeldenummer: 91101329.0
(22) Anmeldetag: 01.02.1991
(51) Int. Cl.: F16F 13/00

(54) **Hydraulisch dämpfendes Gummilager**
Hydraulically damped rubber mounting
Support en caoutchouc à anti-vibration hydraulique

(30) Priorität: 15.05.1990 DE 4015523
(43) Veröffentlichungstag der Anmeldung: 21.11.1991
(73) Patentinhaber: Boge GmbH, D-53783 Eitorf (DE)
(72) Erfinder: Mayerböck, Wilhelm, W-5483 Kirchdaun (DE); Krause, Wolfram, W-5357 Swisttal-Morenhoven (DE)

(56) Entgegenhaltungen:
- EP-A- 0 044 908
- EP-A- 0 416 381
- DE-A- 3 617 787
- DE-A- 3 722 079
- DE-A- 3 723 135
- GB-A- 2 195 166

## Beschreibung

Die Erfindung bezieht sich auf ein hydraulisch dämpfendes Gummilager mit mindestens einem Befestigungsteil und mindestens zwei, in einem einteiligen Elastomerkörper axial hintereinander angeordneten, Dämpfungsflüssigkeit enthaltenen Kammern, die über eine ringförmig um die Lagerachse verlaufende Strömungsverbindung miteinander verbunden sind, wobei die die Kammern trennende Zwischenwand eine Scheibe enthält und wobei ein ringförmiges, zumindest teilweise die Strömungsverbindung enthaltendes, zweiteiliges Element zusammen mit der Zwischenwand und dem Elastomerkörper die Kammern begrenzt und dabei das ringförmige Element als vorgefertigtes Bauteil die Kammern zum Außenumfang des Gummilagers hinbegrenzt.

Es sind Gummilager bekannt (z.B. DE 30 19 337 A1, DE 33 43 392 A1), bei denen zwischen zwei Befestigungsteilen ein Elastomerkörper angeordnet ist. Die beiden Dämpfungsmittel enthaltenen Kammern sind über eine Strömungsverbindung miteinander verbunden. Nachteilig ist, daß der geometrische Aufbau mehrere Vulkanisationsvorgänge benötigt bzw. entsprechende Bauteile und Abdichtungen für die Begrenzung der Kammern benötigt werden.

Darüber hinaus sind Gummilager bekannt (DE 37 23 135 A1), die mindestens zwei, in einem Elastomerkörper axial hintereinander angeordnete Kammern aufweisen, dieser Stand der Technik wurde im Oberbegriff des Anspruchs 1 berücksichtigt. Die Kammern sind dabei über eine Strömungsverbindung miteinander verbunden. Nachteilig ist hierbei, daß die Strömungsverbindung entsprechenden Fertigungstoleranzen unterliegt, bzw. die Strömungsverbindung wird durch die Toleranzen der zu verbindenden Teile beaufschlagt.

Aufgabe der Erfindung ist es, ein hydraulisch dämpfendes Gummilager so auszubilden, daß eine einfache Herstellung möglich ist, wobei der Elastomerkörper durch eine entsprechende Geometrie in einem einzigen Vulkanisationsvorgang herstellbar ist.

Zur Lösung dieser Aufgabe ist erfindungsgemäß vorgesehen, daß die Strömungsverbindung innerhalb des ringförmigen Elementes angeordnet ist.

Vorteilhaft ist bei dieser Ausbildung, daß der Elastomerkörper in einem einzigen Vulkanisationsvorgang hergestellt wird und daß durch eine anschließende Montage des die Strömungsverbindung enthaltenden Bauteiles sowie dem Befestigungsteil das Gummilager komplettiert wird. Hierbei lassen sich verschiedene Ausführungsformen von Befestigungsteilen verwenden wie auch die die Strömungsverbindung enthaltenen Elemente unterschiedlich gestaltet werden können. Gleichzeitig dient das Element zur Begrenzung der Kammern zusammen mit der Zwischenwand, wobei die Zwischenwand mit dem Element kraftschlüssig und elastisch dichtend verbunden ist. Desweiteren ist von Vorteil, daß die in der Zwischenwand befindliche Scheibe mit einem krafteinleitenden Bauteil befestigt ist und somit axiale Bewegungen ausführt.

Nach einem weiteren Merkmal gemäß Anspruch 2 ist vorgesehen, daß die Scheibe von der Zwischenwand mit Elastomer ummantelt ist. Diese Scheibe wird im Vulkanisationsvorgang direkt in die Zwischenwand eingebracht.

Eine besonders günstige Ausführungsform sieht vor, daß der Elastomerkörper auf mindestens einer Stirnseite mit einem Metallteil armiert ist. Diese Metallteile in der Stirnseite können zur Abstützung des äußeren Befestigungsteiles herangezogen werden, indem nach Einlegen des Elementes das äußere Befestigungsteil in Form eines Rohres aufgebracht und anschließend an den Enden verschlossen wird.

Nach einer weiteren wesentlichen Ausführungsform ist vorgesehen, daS die Geometrie mindestens einer Kammer so ausgebildet ist, daS sie einen axialen Anschlag für die Zwischenwand bilden. Dabei kann die Kammer über den Umfang verlaufend derart von der Zwischenwand beabstandet sein, daß sie in einem entsprechenden Maß zur Zwischenwand verläuft.

Desweiteren ist vorgesehen, daß die Kammern nierenförmig oder über den gesamten Umfang verlaufend angeordnet sind.

In Ausgestaltung der Erfindung ist vorgesehen, daß jedes der Metallteile einen sich axial erstreckenden Flansch ausbildet, der unter Zwischenschaltung eines Abschnittes des Elastomerkörpers einen radialen Anschlag zum krafteinleitenden Bauteil bildet.

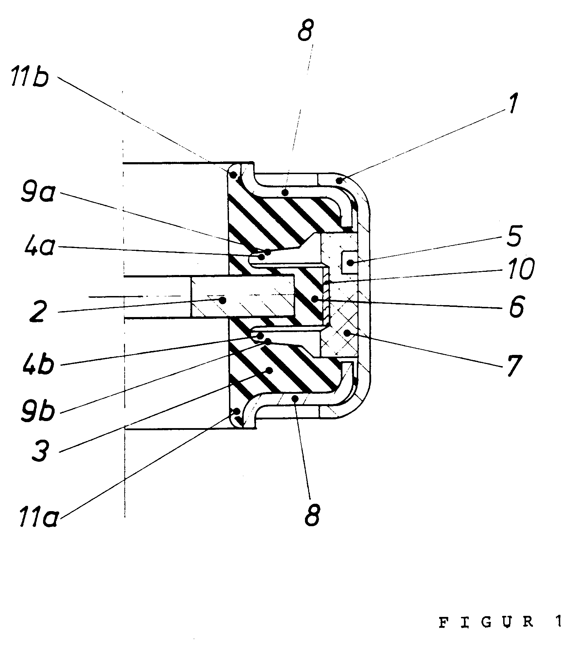

Ein bevorzugtes Ausführungsbeispiel ist in der Zeichnung schematisch dargestellt.

In der Figur ist ein hydraulisch dämpfendes Gummilager dargestellt, bei dem ein Elastomerkörper 3 einteilig ausgebildet ist, wobei in der Zwischenwand 6 eine Scheibe 2 und in den Stirnbereichen jeweils ein Metallteil einvulkanisiert ist. Die Scheibe 2 dient zur Befestigung an einem krafteinleitenden Bauteil (nicht dargestellt) während die Metallteile mit dem äußeren Befestigungsteil 1 durch Verschließen miteinander verbunden werden. Vor dem Schließen des äußeren Befestigungsteiles 1 ist das Element 7 einzulegen, so daß durch das Element 7 dem Elastomerkörper 3 und der Zwischenwand 6 die beiden Kammern 4a und 4b gebildet werden. Im Element 7 ist eine Strömungsverbindung 5 vorgesehen, die die Kammern 4a und 4b zur Drosselung des Dämpfungsmittels miteinander verbindet.

Als Strömungsverbindung 5 kann eine einfache geometrische Verbindung vorgesehen werden, wie auch ein ringförmig um die Lagerachse verlaufender Kanal vorgesehen werden kann.

Die Zwischenwand 6 ist über Vorspannung dichtend mit dem Element 7 verbunden, wobei zur Verschleißminderung ein Kunststoff- oder Metallring 10 angebracht werden kann.

Im axial inneren Bereich sind die Kammern mit einem geringen Abstand zur Zwischenwand 6 versehen, so daß die Zwischenwand 6 zusammen mit der Kammerwandung einen Anschlag 9a, 9b in axialer Richtung bilden.

### Bezugszeichenliste

- 1: Befestigungsteil
- 2: Scheibe
- 3: Elastomerkörper
- 4a, b: Kammer
- 5: Strömungsverbindung
- 6: Zwischenwand
- 7: Element
- 8: Metallteil
- 9: Anschlag axial
- 10: Kunststoff- oder Metallring
- 11a, b: Anschlag radial

## Patentansprüche

1. Hydraulisch dämpfendes Gummilager mit mindestens einem Befestigungsteil (1) und mindestens zwei, in einem einteiligen Elastomerkörper (3) axial hintereinander angeordneten, Dämpfungsflüssigkeit enthaltenen Kammern (4a,4b), die über eine ringförmig um die Lagerachse verlaufende Strömungsverbindung (5) miteinander verbunden sind, wobei die die Kammern (4a, 4b) trennende Zwischenwand (6) eine Scheibe (2) enthält und wobei ein ringförmiges, zumindest teilweise die Strömungsverbindung (5) enthaltendes, zweiteiliges Element (7) zusammen mit der Zwischenwand (6) und dem Elastomerkörper (3) die Kammern (4a, 4b) begrenzt und dabei das ringförmige Element (7) als vorgefertigtes Bauteil die Kammern (4a, 4b) zum Außenumfang des Gummilagers hinbegrenzt,
dadurch gekennzeichnet,
daß die Strömungsverbindung (5) innerhalb des ringförmigen Elementes (7) angeordnet ist.

2. Lager nach Anspruch 1,
dadurch gekennzeichnet,
daß die Scheibe (2) von der Zwischenwand (6) mit Elastomer ummantelt ist.

3. Lager nach Anspruch 1,
dadurch gekennzeichnet,
daß die Scheibe (2) mit einem krafteinleitenden Bauteil verbindbar ist.

4. Lager nach Anspruch 1,
dadurch gekennzeichnet,
daß der Elastomerkörper (3) auf mindestens einer Stirnseite mit einem Metallteil (8) armiert ist.

5. Lager nach Anspruch 1,
dadurch gekennzeichnet,
daß mindestens ein Ende eines Befestigungsteiles (1) mit dem Elastomerkörper (3) durch Formschluß verbunden ist.

6. Lager nach Anspruch 1,
dadurch gekennzeichnet,
daß die Geometrie mindestens einer Kammer (4a, 4b) so ausgebildet ist, daS sie einen axialen Anschlag (9a, 9b) für die Zwischenwand bilden.

7. Lager nach Anspruch 1,
dadurch gekennzeichnet,
daß die Kammern (4a, 4b) nierenförmig oder über den gesamten Umfang verlaufend angeordnet sind.

8. Lager nach einem der Ansprüche 4 bis 7,
dadurch gekennzeichnet,
daß jedes der Metallteile (8) einen sich axial erstreckenden Flansch ausbildet, der unter Zwischenschaltung eines Abschnittes des Elastomerkörpers (3) einen radialen Anschlag (11a, 11b) zum krafteinleitenden Bauteil bildet.

## Claims

1. An hydraulically damped rubber mounting with at least one attachment member (1) and at least two chambers (4a, 4b) containing damping fluid and arranged axially in series in a one-piece elastomeric body (3), the chambers being connected to each other by an annular flow connection (5) extending around the axis of the mounting, in which the intermediate wall (6) separating the chambers (4a, 4b) includes a disc (2) and in which an annular two-piece element (7), including at least part of the flow connection (5), defines the limits of the chambers (4a, 4b), together with the intermediate wall (6) and the elastomeric body (3) and moreover the annular element (7) is a prefabricated component and defines the limits of the chambers (4a, 4b) to the outer periphery of the rubber mounting,
characterised in that,
the flow connection (5) is disposed inside the annular element 7.

2. Mounting according to Claim 1,
characterised in that,
the disc (2) is encased with elastomer from the intermediate wall (6).

3. Mounting according to claim 1,
characterised in that
the disc (2) is able to be connected to a force-applying component.

4. Mounting according to claim 1,
characterised in that,
the elastomeric body (3) is reinforced on at least one face with a metal component (8).

5. Mounting according to claim 1,
characterised in that,
an attachment member (1) has a closed form at at least one end, for connection of the elastomeric body (3).

6. Mounting according to claim,
characterised in that,
the geometry of at least one chamber (4a, 4b) is so arranged that it forms an axial stop (9a, 9b) for the intermediate wall.

7. Mounting according to claim 1,
characterised in that,
the chambers (4a, 4b) are arranged in a kidney shape extending over the periphery.

8. Mounting according to one of claims 4 to 7,
characterised in that
each metal component (8) has an axially extending flange, which with the interposition of a section of the elastomeric body (3) forms a radial stop for the force-applying component.

## Revendications

1. Support en caoutchouc à amortissement hydraulique comportant au moins une pièce de fixation (1) et au moins deux chambres (4a, 4b) contenant du fluide d'amortissement, agencées axialement l'une derrière l'autre dans un corps élastomère (3) d'une seule pièce, lesdites chambres étant reliées l'une à l'autre par l'intermédiaire d'une liaison d'écoulement (5) s'étendant en forme d'anneau autour de l'axe du support, la paroi intermédiaire (6) séparant les chambres (4a, 4b) contenant un disque (2), et un élément annulaire (7) en deux parties, comprenant au moins en partie la liaison d'écoulement (5), limitant les chambres (4a, 4b) conjointement avec la paroi intermédiaire (6) et le corps élastomère (3), et l'élément en forme d'anneau (7), en tant que composant préfabriqué, limitant ici les chambres (4a, 4b) par rapport à la circonférence extérieure du support en caoutchouc,
caractérisé en ce que la liaison d'écoulement (5) est agencée à l'intérieur de l'élément en forme d'anneau (7).

2. Support selon la revendication 1, caractérisé en ce que le disque (2) de la paroi intermédiaire (6) est enveloppé d'élastomère.

3. Support selon la revendication 1, caractérisé en ce que le disque (2) peut être relié à un élément d'application de force.

4. Support selon la revendication 1, caractérisé en ce que le corps élastomère (3) est armé d'une pièce métallique (8) sur au moins une face frontale.

5. Support selon la revendication 1, caractérisé en ce qu'au moins une extrémité d'une pièce de fixation (1) est reliée au corps élastomère (3) par blocage par coopération de formes.

6. Support selon la revendication 1, caractérisé en ce que la géométrie d'au moins une chambre (4a, 4b) est réalisée de manière à former une butée axiale (9a, 9b) pour la paroi intermédiaire.

7. Support selon la revendication 1, caractérisé en ce que les chambres (4a, 4b) sont agencées en forme de lobes ou s'étendent sur toute la circonférence.

8. Support selon l'une quelconque des revendications 4 à 7, caractérisé en ce que chacune des pièces métalliques (8) forme une bride s'étendant axialement, qui forme une butée radiale (11a, 11b) par rapport à l'élément d'application de force, avec interposition d'un tronçon du corps élastomère (3).
